# EUROPEAN PATENT APPLICATION

(11) **EP 4 734 013 A1**
(43) Date of publication of application: **29.04.2026**
(21) Application number: 24210818.1
(22) Date of filing: 05.11.2024
(51) Int. Cl.: G06N 10/60

(54) **METHOD AND SYSTEM FOR ENHANCING PERFORMANCE OF LARGE LANGUAGE MODELS USING QUANTUM CIRCUITS**

(30) Priority: 22.10.2024 WO PCT/IB2024/000540
(71) Applicant: Multiverse Computing S.L., Gipuzkoa (ES)
(72) Inventor: Aizpurua, Borja, 20014 Donostia-San Sebastián (ES); Jahromi, Saeed S., 20014 Donostia-San Sebastián (ES); Singh, Sukhbinder, Toronto, M5C 2T2 (CA); Orús, Román, 20014 Donostia-San Sebastián (ES)

(57) **Abstract**

A computer-implemented method for improving the computational efficiency and performance of large language models (LLMs) within at least one hybrid classical-quantum computation system with involving quantum circuits and tensor networks; and the classical computing device applies disentanglers to decompose the weight matrices of self-attention layers and multilayer perceptron (MLP) layers of a pre-selected large language model (LLM) into an unitary quantum circuits and a non-unitary tensor network for allowing transformation into quantum circuits into quantum gates; and sends this information to at least one quantum computing device within a quantum circuits; and processes non-unitary tensor network with at least one classical computing device and combines both results to reconstruct the large language model; and enlarges the bond dimension of the non-unitary tensor network and the number of layers of the quantum circuits; and optimizes the new parameters variationally in order to improve the accuracy beyond that of the original LLM.

## Description

### CROSS-REFERENCE TO RELATED APPLICATIONS

None.

### TECHNICAL FIELD OF THE INVENTION

The present disclosure relates to methods for improving the computational efficiency and performance of large language models (LLMs), specifically in the field of quantum-enhanced natural language processing (NLP).

Specifically, but without limitation, the disclosure pertains to replacing classical self-attention and multilayer perceptron (MLP) layers with a combination of quantum circuits and tensor networks, for enhancing the performance of large language models (LLMs).

### BACKGROUND OF THE INVENTION

Large language models (LLMs) have revolutionized natural language processing (NLP), enabling advancements in tasks such as machine translation, text generation, and semantic analysis. In the state of the art, LLMs such as ChatGPT and LlaMA, have achieved remarkable advancements in natural language processing (NLP) and generative artificial intelligence (Al). However, these models' immense size and complexity result in significant challenges, including high training and inference costs, substantial energy consumption, and limitations in deploying them on-site, especially in resource-constrained environments.

Increasing size and complexity of these models present significant challenges in computational efficiency, memory usage, and energy consumption. Existing model compression techniques, such as pruning, quantization, and low-rank approximation, have sought to reduce these demands. While these methods have shown some success, they primarily focus on reducing the number of neurons or the precision of the weights, which may not always be the most effective strategy for optimizing the model's overall efficiency.

Classical self-attention and MLP layers, essential to the operation of these models, exacerbate these issues, particularly when real-time processing is required or when operating in resource-constrained environments. However, the self-attention mechanisms and multilayer perceptron (MLP) layers within these models (classical LLMs) demand substantial computational power and memory resources, particularly as the model size and input data dimensions increase. This challenge is further exacerbated in scenarios requiring real-time processing or deployment in environments with constrained computational resources.

Moreover, classical computation methods often struggle to capture intricate dependencies in high-dimensional data efficiently. The current design of LLMs involves handling a large number of parameters, leading to increased energy consumption and longer training times, which are not only costly but also environmentally unsustainable. As industries seek more energy-efficient solutions to meet the demand for larger and more sophisticated language models, there is an urgent need for innovative approaches that can address these limitations without sacrificing performance.

A published document https://doi.orq/10.48550/arXiv.2401.14109 explains a reducing cost of computational task of the LLMs. According to this method, a quantum inspired method compresses the trained LLMs and reduces the re-training costs. Tensor networks compress LLMs by focusing on their internal correlation structures. This publication focusses on optimizing classical architectures such as above mentioned LLMs, by using quantuminspired tensor networks such as Matrix Product Operators.

Patent document US10275721B2 explains a quantum machine learning method and system. However, this system and method does not applicable any layers of large language models (LLMs), specially there is no mention the hybrid approach that contain quantum circuits and tensor network structures which is compress the layer and the new architecture can be computed with classical digital computer and quantum systems together.

As a result, all the problems listed above require innovation in the relevant field.

### SUMMARY

The present disclosure addresses abovementioned challenges and to make a development in the relevant technical field.

This disclosure offers a new pathway to enhancing the performance of LLMs through quantum circuits, leading to significant improvements in accuracy and efficiency for natural language processing tasks.

The main objective of the disclosure is the introduction of quantum circuits into the architecture of LLMs, bringing several notable performance improvements such as increasing the accuracy, reduced energy consumption, faster training and inference and scalability. Also, the disclosure provides more efficient and scalable AI systems.

Another object of the disclosure is to enhance the accuracy of LLMs while simultaneously reducing the computational and energy burdens associated with training and inference, enabling more scalable and sustainable NLP solutions. To provide this, it aims to improving the accuracy of natural language processing (NLP) tasks while significantly reducing energy consumption, leveraging quantum computing's superior capabilities in managing complex optimization problems within reduced-dimensional spaces by transforming and optimizing the self-attention and multilayer perceptron (MLP) layers of LLMs by integrating quantum computing. Especially, transforming these layers to quantum circuits concatenated with tensor networks as a replacement of classical weight matrices.

Another objective of the disclosure, providing computational efficiency and performance improvements in large-scale language models.

Another objective of the disclosure, improving scalability, allowing for the handling of larger models and datasets without incurring prohibitive computational costs.

Another objective of the disclosure, reducing the memory usage of at least one layer of the LLMs due to the truncation of the bond dimension, which effectively discards irrelevant parameters.

Another objective of the disclosure, establishing the integration of classical large language models in quantum circuits using a combination of disentangling operations followed by a tensor network, such as a Matrix Product Operator.

The disclosure is related to method and system for enhancing performance of large language models using quantum circuits to fulfil one, some or all aims mentioned above and will be obtained from the following detailed description. The disclosure is also related to: data processing systems with means for carrying out the methods; computer program products comprising instructions which, when the program products are executed by at least one computing unit, cause the at least one computing unit to carry out the methods; and computer-readable data carrier having stored thereon the computer program products, which may be computer-readable non-transitory storage mediums in some examples.

In accordance with embodiments, a computer-implemented method for improving the computational efficiency and performance of large language models (LLMs) within at least one hybrid classical-quantum computation system or a quantum simulation that runs by a classical computing device; the classical computing device configured to receiving a pre-selected large language model (LLM) that comprising self-attention layers and multilayer perceptron (MLP) layers, wherein the self-attention layers and the multilayer perceptron layers comprise weight matrices; and applies disentangling operations to decompose the weight matrix into an unitary quantum circuits and a non-unitary tensor network for allowing transformation into quantum circuits by converting the unitary quantum circuits into quantum gates; processes the tensor network with at least one classical computing device; encodes the input for ensuring that the data is represented in the quantum domain for initializing the qubits; and sends the transformed and integrated structure of the unitary quantum circuits to at least one quantum computing device. The quantum computing device provides manipulating the qubits with applying/executing the quantum circuits that provided from a classical computing device; and computes probabilistic measurements at the end of the quantum circuits and sends the results to the classical computing device. At least one classical computing device integrates the final quantum state vector which are retrieved from the quantum computing device that computed with the generated quantum circuits and non-unitary tensor network to existing LLM architecture with replacing self-attention and multilayer perceptron layers with quantum circuits followed by a non-unitary tensor network.

In accordance with further embodiments, the method characterized by translating the non-unitary part of the weight matrix into a tensor network, which in some specific embodiments can be a Matrix Product Operator, for ensuring that accurately replication the behavior of the original network layer.

In accordance with further embodiments, the method characterized by increasing the bond dimension of the tensor network, in order to improve the accuracy of the system and method with respect to the behavior of the original network layer.

In accordance with further embodiments, the method characterized by increasing the number of layers of the quantum circuits of disentanglers and applying variational optimization techniques to further refine the quantum gates after the unitary quantum circuits and input data are encoded in the quantum computer to provide fine-tuned parameters of the quantum circuits ensuring that the quantum circuits improve the performance of the original network layer.

In accordance with further embodiments of the method, classical computing device employes tensorization step to the non-unitary part of the weight matrix to reduce the bond dimension and simplifying the structure for more efficient representation. Tensorization is usable to estimate the level of entanglement (and therefore quantum resources estimation) and optimize components of the non-unitary part.

In an alternative embodiment of the method, it provides improved performance in tensor network algorithms, where lowering the bond dimension is crucial for scalability. Thus, provided by the combined effect of the disentanglers and the reduced-dimension MPO offer an efficient representation of the original matrix, capturing its essential features while minimizing the computational complexity typically associated with high bond dimensions.

In accordance with further embodiments of the method, quantum variational algorithm in Variational Quantum Eigensolver (VQE) algorithm employed to find the optimal parameters of the quantum circuits that maximize the performance of the model.

In accordance with further embodiments of the method, the classical computer encodes the input data which consists of classical vectors into the quantum states with normalizing each input vector. In some embodiments, this encoding can be implemented using quantum Generative Adversarial Networks. In other embodiments, this encoding can be implemented using Tensor Network methods.

In accordance with further embodiments of the method, classical computing device applies transpose of the unitary operator into the quantum state.

In accordance with further embodiments of the method, the classical computing device applies quantum state tomography to the results which are retrieved from quantum computing device to extracting meaningful information from the quantum state representing the dominant contribution of the quantum state.

In accordance with further embodiments of the method, classical computing device multiplies the final quantum state vector with the tensor network obtained from tensor network optimization of the non-unitary part pf the weight matrix. Also, classical computing device converts the results to classical tensor structure for further processing in the neural network.

In accordance with other embodiments, a system for improving the computational efficiency and performance of large language models (LLMs) that comprising at least one classical digital computer for generating and directing a computational task to at least one quantum (computer) over a network, wherein said classical digital computer comprises at least processing unit and at least one memory medium characterized by wherein said processing unit configured to: receiving a pre-selected large language model (LLM) comprising self-attention layers and multilayer perceptron (MLP) layers, wherein the self-attention layers and the multilayer perceptron layers comprise weight matrices from at least one user or device; applying disentanglers to decompose the weight matrix of the large language model into an unitary quantum circuits and a non-unitary tensor network for allowing storage of the quantum circuits and non-unitary tensor network in at least one memory medium; processing the nonunitary tensor network with at least one classical computing device; sending the transformed and integrated structure of the unitary quantum circuits to at least one quantum (computer); encodes the input data which consists of classical vectors into the quantum states with normalizing each input vector and using amplitude encoding to map onto a quantum state; applies transpose of the unitary operator into the quantum state; multiplies the final quantum state vector which computed with the data retrieved from quantum (computer) with the nonunitary tensor network to reconstruction the LLM architecture; enlarges the bond dimension of the nonunitary tensor network and the number of layers in the quantum circuits; optimizes the parameters of the new tensor network and the new quantum circuits so as to improve the accuracy of the whole LLM model.

In accordance with further embodiments, the system comprises the quantum (computer) that manipulates the qubits with applying/executing the quantum circuits that provided from the classical computer; and sends the obtained results to the classical computer.

In a preferred embodiment of the disclosure, the method applies disentanglers directly to the tensor network decomposition of classical neural network weight matrices of pre-selected LLM(s), particularly the self-attention and multilayer perceptron (MLP) components of transformers and it transforms them into quantum circuits followed by a non-unitary tensor network, which are optimized using variational parameters to efficiently capture high-dimensional dependencies.

In a preferred embodiment of the disclosure, all the initial tensor network decompositions of weight matrices are given by Matrix Product Operators.

In preferred embodiment of the disclosure, the new Matrix Product Operator can be further disentangled by a quantum circuits (21), and the remaining operator can also be written in Matrix Product Operator format. When implemented on a quantum computer (QLLM), the input to the quantum circuits must be computed via quantum state encoding, and the output must be estimated via sampling. Allowing for more layers in the quantum circuits and for larger bond dimensions in the remaining Matrix Product Operator enhances the model beyond the capabilities of the original one.

In preferred embodiment of the disclosure, the method provides handling complex optimization problems, the quantum circuits provide more accurate representations of high-dimensional dependencies in data. This results in a model that outperforms classical LLMs in terms of accuracy, especially on complex natural language processing tasks.

In preferred embodiment of the disclosure, the method provides inherently more efficient LLMs at processing high-dimensional data. By replacing computationally heavy classical layers with quantum circuits and tensor networks, the hybrid model achieves significant reductions in energy consumption during both training and inference, making it more sustainable.

In preferred embodiment of the disclosure, the method provides potential for faster processing as quantum technologies mature, while current implementations rely on simulators due to the noise and limitations of NISQ-era quantum hardware. Quantum circuits, in principle, offer advantages through parallelism and the ability to handle high-dimensional spaces more efficiently than classical methods. As quantum hardware continues to improve, the model is expected to benefit from reduced training times and faster inference, paving the way for real-time deployment in the future.

In preferred embodiment of the disclosure, the method ensures that it can be scaled up for larger datasets and more complex tasks without suffering from the same computational bottlenecks that plague classical models.

The protection scope of the disclosure is specified in the claims and cannot be limited to the description made for illustrative purposes in this brief and detailed description. It is clear that a person skilled in the art can present similar embodiments in the light of the above and following descriptions without departing from the main theme of the disclosure.

### BRIEF DESCRIPTION OF DRAWINGS

For better understanding of the various embodiments described herein, and to show more clearly how these various embodiments may be carried into effect, reference will be made, by way of example, to the accompanying drawings which show at least one example embodiment, and which are now described. The drawings are not intended to limit the scope of the teaching described herein.
Figure 1A represents a large language model architecture for some embodiments of the disclosure.
Figure 1B represents a quantum large language model architecture for some embodiments of the disclosure.
Figure 2A represents a linear layer of an LLM model.
Figure 2B represents the decomposition of the weights of the linear layer in terms of a unitary quantum circuits of disentanglers followed by a non-unitary tensor network.
Figure 3 represents some embodiments of the system.

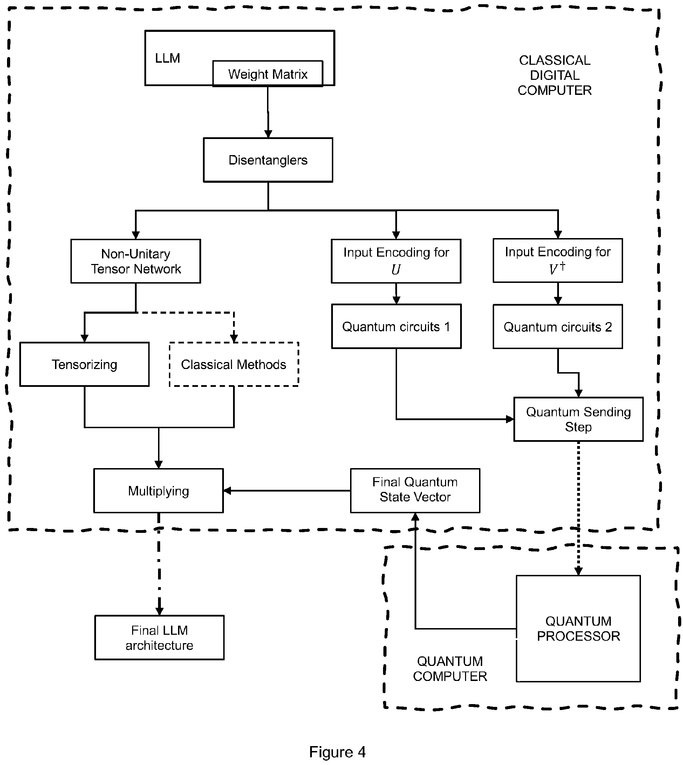

Figure 4 shows a schematic flow chart for some embodiment of the disclosure.

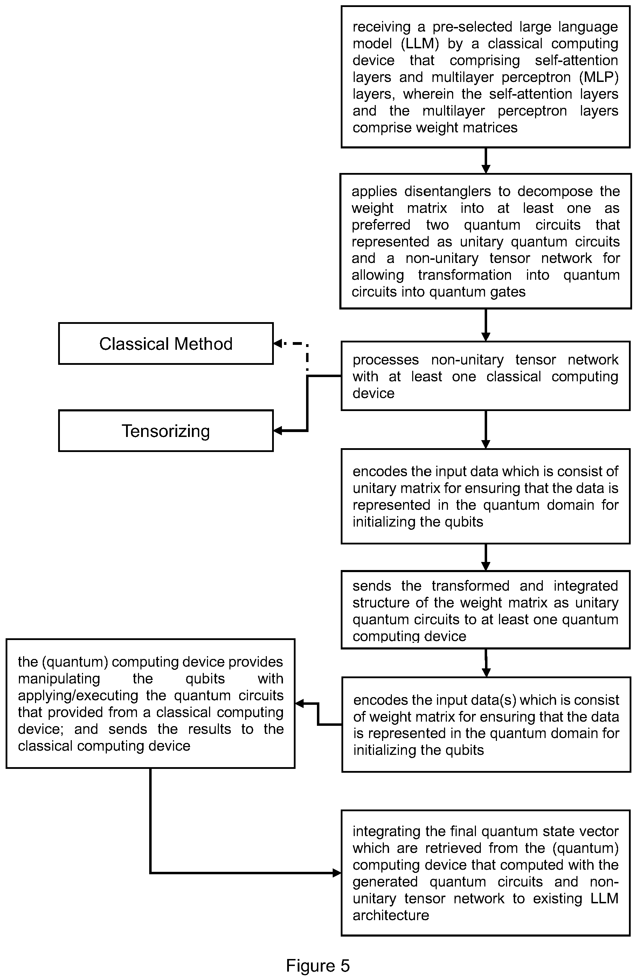

Figure 5 illustrates in a flowchart that shows the steps of a method in accordance with some embodiments of the disclosure.

For a better understanding of the above-mentioned figures, the reference numbers illustrated in the figures are provided for descriptive purposes and are not intended to limit the scope of the disclosure.

### DETAILED DESCRIPTION OF THE INVENTION

In this detailed description, method and system (S) for enhancing performance of large language models using quantum circuits is described by means of examples only for clarifying the subject matter without any limitation of the scope of the disclosure.

A computer-implemented method for improving the computational efficiency and performance of large language models (LLMs) within at least one hybrid classical-quantum computation system; the method characterized by; receiving a pre-selected large language model (LLM) by a classical computing device that comprising self-attention layers and multilayer perceptron (MLP) layers, wherein the self-attention layers and the multilayer perceptron layers comprise weight matrices; at least one classical computing device applies disentanglers to decompose the weight matrix into an unitary quantum circuits and a nonunitary tensor network for allowing transformation into quantum circuits by converting unitary part of the weight matrix into quantum gates; processes non-positive tensor network with at least one classical computing device; encodes the input data for ensuring that the data is represented in the quantum domain for initializing the qubits; sends the transformed and integrated structure of the unitary quantum circuits to at least one quantum computing device; and the quantum computing device provides manipulating the qubits with applying/executing the quantum circuits that provided from a classical computing device; and computes probabilistic measurements at the end of the quantum circuits, and sends the results to the classical computing device, and at least one classical computing device integrates the final quantum state vector which are retrieved from the (quantum) computing device that computed with the generated quantum circuits and non-unitary tensor network to existing LLM architecture with replacing self-attention and multilayer perceptron layers with a quantum circuits and a nonunitary tensor network.

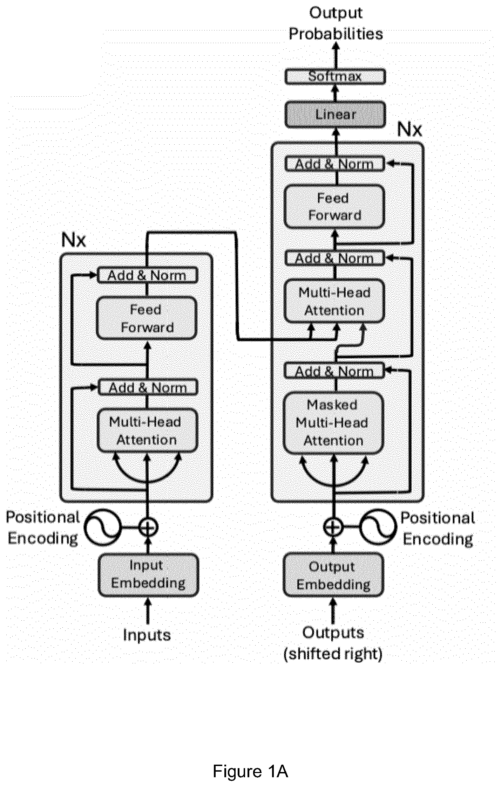

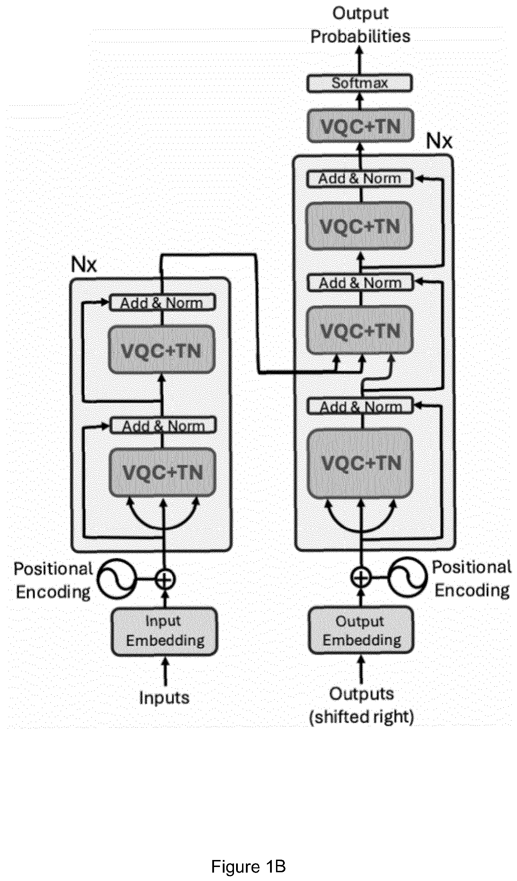

Figure 1A represents a large language model architecture and Figure 1B represents a quantum large language model architecture for some embodiments of the disclosure. According to the implementation of the disclosure, where layers of the large language model architecture that involving weight matrices have been replaced by a variational quantum circuits combined with a tensor network. For providing this, the method includes applying disentanglers to decompose the weight matrix into at least one as preferred two unitary quantum circuit and a non-unitary tensor network. Thus, provides a complex weight matrix *W* and the product of a unitary quantum circuits and a non-unitary tensor network.

According to the method, a Matrix Product Operator (MPO) decomposition to weight matrix is computed and truncates the bond dimension *χ* of the Matrix Product Operator (MPO) to preserve the model's accuracy. This step reveals the relevant correlations between the degrees of freedom in the layer. As a result, the memory usage of that layer is reduced due to the truncation of the bond dimension *χ*, which effectively discards irrelevant parameters.

If preferred embodiment of the disclosure, the computing unit (10) configured to identifying layers of the LLM with the weight matrices, decomposing the weight matrices of the LLM into a tensor network. This step rewrites the weight matrix *W* in a format that explicitly reveals the relevant correlations between the degrees of freedom in the layer into a memory medium (20). As a result, the memory usage of that layer is reduced due to the truncation of the bond dimension *χ*, which effectively discards irrelevant parameters.

In following step, a quantum computer (Q) *two quantum circuits of disentanglers,* for the Matrix Product Operator (MPO), that one for the input and one for the output. Specifically, compute two circuits composed of two-body unitary gates that remove as much entanglement as possible from the Matrix Product Operator (MPO). Since the Matrix Product Operator (MPO) is an operator, one circuit is acting on the input, and the other circuit is acting on the output. The computation of disentanglers is well-established.

According to the method, computation of the quantum circuits of disentanglers for the Matrix Product Operator (MPO) established by a quantum computer (Q). According to the embodiment, a quantum computer (Q) computes two quantum circuits (21) of disentanglers, for the Matrix Product Operator (MPO), that one for the input and one for the output. Specifically, computation of two circuits composed of two-body unitary gates that remove as much entanglement as can be managed from the Matrix Product Operator (MPO) of weight matrix *W*. The computation of disentanglers is a well-established procedure in the field of tensor networks, forming the core of techniques such as Entanglement Renormalization (ER) and the Multiscale Entanglement Renormalization Ansatz (MERA). The disentanglers can be computed efficiently using iterative methods. The process continues until most (all as preferred) of the entanglement is removed from the Matrix Product Operator (MPO), resulting in a unitary disentangling quantum circuits (21).

Computation of a new Matrix Product Operator (MPO) with classical digital computing device (40) representing the remaining part of the original Matrix Product Operator (MPO) that cannot be disentangled. This process is described by the equation *MPO_{old} = UxMPOnew x V^{†},* where old Matrix Product Operator (MPOold) is the original Matrix Product Operator (MPO) decomposition of the weight matrix *W*, (Since MPOold is not necessarily Hermitian, we have that *U* ≠ *V* in general) the new Matrix Product Operator (MPOnew) is the "remaining" Matrix Product Operator (MPO), and *U* and *V^{†}* are the unitary quantum circuits (21) of disentanglers. Since unitary quantum circuits (21) removes entanglement from the original Matrix Product Operator (MPO), it follows that the bond dimension of new Matrix Product Operator (MPOnew), is lower than that of old Matrix Product Operator (MPOold). The new Matrix Product Operator (MPOnew), can be computed as *MPO_{new} = U^{†} x MPO_{old}x V*. This computation can be efficiently carried out using standard tensor network approximation techniques, such as the Time-Evolving Block Decimation (TEBD) algorithm within a classical digital computer (C).

In another embodiment of the disclosure, the quantum circuits (21) can be obtained, such as using the polar decomposition *W = U × P* of the weight matrix, where *U* is unitary and *P* is positive-definite, are also possible. Unitary matrix *U* can be directly mapped to a quantum circuits (21) since quantum operations are inherently unitary. Thus, provides decomposition unitary matrix into a sequence of quantum gates that can be implemented on quantum hardware. In preferred embodiment, quantum circuits (21) involve one and two qubit gates following well-established quantum operator techniques. These gates perform the necessary transformations on quantum states while maintaining the unitary nature of the operations, ensuring the integrity of the quantum computation. Transforming unitary matrix *U* into quantum circuits (21) established by representing unitary matrix as a quantum operator which decomposed into sequence of quantum gates that are compatible with the target quantum hardware.

Construction of the quantum operator established by transpose of the unitary matrix (*U*^{T}). The quantum circuits (21) operates with *U*|*ψ*〉 however classical data corresponds to 〈*ψ*|*U.*

After the transposition process, the quantum circuits (21) transpiled to optimization for the target quantum backend. In this process available gate sets, qubit connectivity, and optimization levels considered. Thus, ensures that the quantum circuits (21) are both efficient and executable on the chosen quantum hardware.

Tensor Network Matrix Product Operator (MPOnew), retains the scaling properties of weight matrix. However, it tends to exhibit lower entanglement compared to the weight matrix due to the removal of the unitary component. This reduction on entanglement makes it more efficient for classical processing with a classical digital computer (C), benefiting from reduced entanglement and lower computational complexity.

In preferred embodiment of the disclosure, the method includes tensorization of the new Matrix Product Operator (MPOnew). The method leverages the application of two-qubit disentangler unitary operators, which are designed to systematically remove entanglement between adjacent qubits, thereby reducing the bond dimension in a controlled manner. According to the embodiment, method applies a sequence of two-qubit disentangler unitaries at various points in the tensor network. These disentanglers act locally to decouple or disentangle neighboring qubits, minimizing the amount of quantum correlations that contribute to the overall bond dimension. By applying this series of disentangling transformations, significant reduction occurs in the bond dimension, making the resulting tensor network representation more efficient.

At the end of the disentangling process, the final structure consists of two components which one is unitary disentangler which are providing with applying a series of unitary operators to reduce the entanglement between qubits; and remaining part with a significantly reduced bond dimension of the Matrix Product Operator (MPO) which captures the remaining correlations that could not be eliminated by the disentangling unitaries.

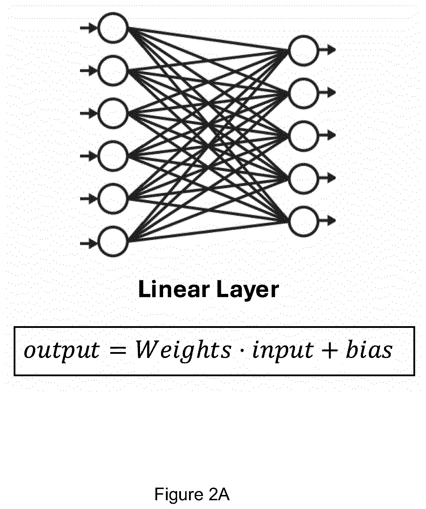

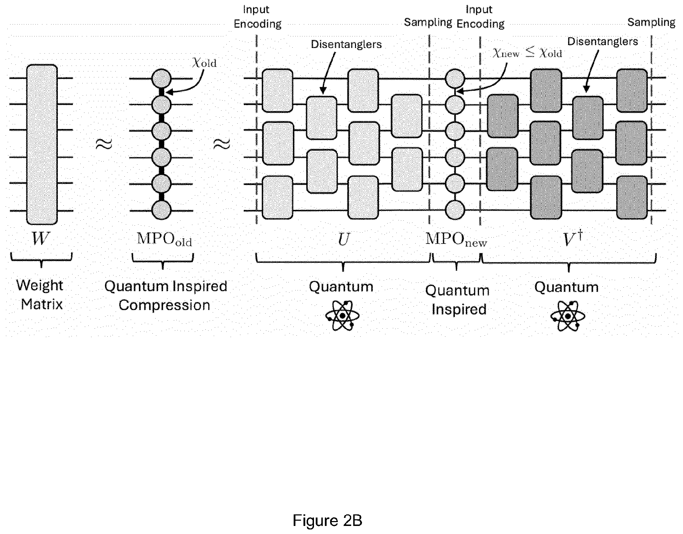

Figure 2B shows integration of the disentangler approach into large language models (LLMs), showing how the unitary matrix is processed on quantum circuits (21) and the non-unitary tensor network is processed with at least one classical digital computer (C). The process is demonstrated in the context of a transformer architecture, with the potential implementation. The figure also highlights the potential implementation of this approach in transformer architectures, with indicating the possible use of quantum hardware for certain computations.

In the quantum data processing step includes quantum state preparation that includes encoding the input data which consist of classical vectors into quantum states and applying it to the quantum circuits (21) by applying transpose of the unitary matrix (operator) to the quantum state. The input to the quantum circuits (21) must be encoded as a quantum state, and the output from the quantum circuits (21) is obtained through sampling via qubit measurements. In some embodiments, this encoding can be implemented using quantum Generative Adversarial Networks. In other embodiments, this encoding can be implemented using Tensor Network methods.

In preferred embodiment of the disclosure, quantum state tomography performed to extract meaningful information from the quantum state.

Due to the exponential scaling of required measurements, subset of measurement selected bases to reduce computational overhead while maintaining acceptable accuracy. From the reconstructed quantum state, we compute the most probable computational quantum states.

In a preferred embodiment of the disclosure, the method includes variational quantum layer integrated into the classical neural network model that provides more robust hybrid architecture, which involves fine-tuning the parameters of the quantum circuits (21) to minimize a loss function relevant to the specific task. Parameterized quantum gates, such as rotation gates and entangling gates with adjustable angles *R*_{θ} = *e^{iθσ}* where σ represents a Pauli operator (e.g., (*σₓ*, *σ_{y},* σ_{z}) and *θ* is the variational parameter, can be incorporated into the quantum circuits (21). Gradient-based optimization algorithms can update these variational parameters, with quantum gradients estimated using techniques like the parameter-shift rule. The optimization loop would involve a forward pass, loss calculation, gradient estimation, and parameter updates. This improves model performance by allowing the quantum circuits (21) to learn optimal transformations tailored to the data.

In preferred embodiment of the disclosure, reconstruct quantum states from measurement data quantum state tomography employed. Thus, provides to extract the density matrix and state vectors necessary for computations.

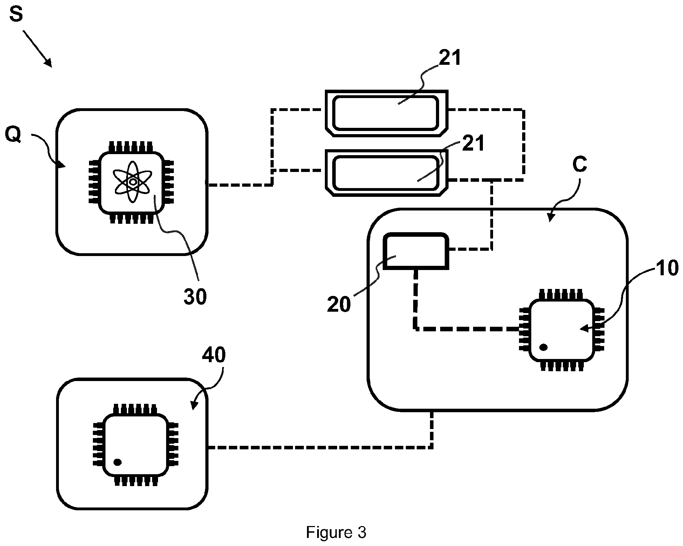

Figure 3 shows a generic description of a system (S) that runs of the method for some embodiments of the disclosure. In a preferred embodiment of the disclosure; a system (S) for improving the computational efficiency and performance of large language models (LLMs) that comprising at least one classical digital computer (C) for generating and directing a computational task to at least one (quantum) computer (Q) over a network, wherein said classical digital computer (C) comprises at least one digital processor (10) and at least one memory medium (20) characterized by; wherein said digital processor (10) configured to: receiving a pre-selected large language model (LLM) comprising self-attention layers and multilayer perceptron (MLP) layers, wherein the self-attention layers and the multilayer perceptron layers comprise weight matrices from at least one user or device;

applying disentanglers to decompose the weight matrix of the large language model into two quantum circuits (21) which are one for input and one for output and a nonunitary tensor network for allowing transformation of the weight matrix into two quantum circuits (21) that stored at least one memory medium (20); processing the non-unitary tensor network with at least one classical digital computing device (40); sending the transformed and integrated structure of the unitary matrix with a quantum circuits (21) to at least one (quantum) computer (Q) that contains at least one (quantum) processor (30); encodes the input data which consists of classical vectors into the quantum states with normalizing each input vector and using amplitude encoding to map onto a quantum state; applies transpose of the unitary operator into the quantum state; multiplies the final quantum state vector which computed with the data retrieved from quantum (computer) (Q) with the non-unitary tensor network which obtained from applying disentanglers to reconstruction of the LLM architecture; enlarges the bond dimension of the non-unitary tensor network as well as the number of layers of the quantum circuits (21), and optimizes variationally the new parameters in order to improve upon the precision of the original LLM model.

In a preferred embodiment of the disclosure, the method and system (S), the (quantum) computer section of the method can be made of superconducting qubits, cold atoms, trapped ions, solid state qubits, and photons, being this not a restriction of the disclosure.

According to the disclosed method, can be applied uniformly across all deep layers of the LLM, allowing us to encode existing LLMs into this hybrid classical-quantum architecture.

In a preferred embodiment of the disclosure, the method and system (S), the classical computing device (40) that process the tensor network may same device that configures the (quantum) computing device (initialize the quantum circuits (21)) or one or more classical digital computer (C) can process the tensor networks, this not a restriction of the disclosure.

Additionally, the method and system (S) of the present disclosure, the classical computing device may include one or more quantum simulators, e.g., quantum simulator. A quantum simulator is a quantum computer that may be programmed to simulate other quantum systems and their properties. Example quantum simulators include experimental platforms such as systems of ultracold quantum gases, trapped ions, photonic systems or superconducting circuits.

Additionally, the method and system (S) of the present disclosure, the classical computing device or classical digital computer (C) may include one or more classical processors, e.g., classical processor. In some implementations, the one or more classical processors, e.g., classical processor may include supercomputers, or multiple computers working with communication with high levels of computational capacity. For example, the classical processor may represent a computational system with a large number of processors, e.g., a distributed computing system or a computer cluster.

The method and system (S) of the present disclosure can be applicable to any computation system with configurations as set out above. In a preferred embodiment of the disclosure, the method and system, the tensor network section of the method can run on a CPU, a GPU, or an FPGA, being this not a restriction of the disclosure.

### REFERENCE NUMERALS

10. Digital processor
20. Memory medium
21. Quantum circuits
30. Quantum processor
40. Classical digital computing device
C. Classical computer
Q. Quantum computer
S. System

### Definitions in the disclosure

*χ*: bond dimension
MPO: Matrix Product Operator
LLM: Large language model
MLP: Multilayer perceptron
ER: Entanglement Renormalization
MERA: Multiscale Entanglement Renormalization Ansatz
*W*: Weight matrix
MPOold: old Matrix Product Operator
MPOnew: new Matrix Product Operator
*U*: Unitary quantum circuits of disentanglers
*V*: Unitary quantum circuits of disentanglers

## Claims

1. A computer-implemented method for improving the computational efficiency and performance of large language models (LLMs) within at least one hybrid classical-quantum computation system, involving quantum circuits (21) and tensor networks; the method **characterized by**;
receiving a pre-selected large language model (LLM) by at least one classical computing device that comprising self-attention layers and multilayer perceptron (MLP) layers, wherein the self-attention layers and the multilayer perceptron layers comprise weight matrices;
the classical computing device
applies disentanglers to decompose the weight matrix into two unitary quantum circuits (21) and a non-unitary tensor network for allowing transformation into quantum circuits (21) by converting the unitary part of the weight matrix into quantum gates;
processes non-unitary tensor network with at least one classical computing device;
encodes the input data ensuring that the data is represented in the quantum domain for initializing the qubits;
sends the transformed and integrated structure of the unitary quantum circuits (21) to at least one (quantum) computing device;
and the (quantum) computing device provides manipulating the qubits with applying/executing the quantum circuits (21) that provided from a classical computing device; and computes probabilistic measurements at the end of the quantum circuits (21); and sends the results to the classical computing device; and
at least one classical computing device integrates the final quantum state vector which are retrieved from the (quantum) computing device that computed with the generated quantum circuits (21) and non-unitary tensor network to existing LLM architecture with replacing self-attention and multilayer perceptron layers with a quantum circuits (21) and a tensor network.

2. A computer-implemented method according to the claim 1, a classical computing device configured to translating the non-unitary part of the weight matrix into a tensor network, which in some specific embodiments can be a Matrix Product Operator, for ensuring that accurately replication the behavior of the original network layer of the large language model.

3. A computer-implemented method according to the claim 1 or claim 2, **characterized by** applying variational optimization techniques to further refine the quantum gates and the tensors of the tensor networks to enlarging the number of layers in the quantum circuits (21) and enlarging the bond dimension of the tensor network after the unitary quantum circuits (21) and non-unitary tensor network obtained, ensuring that the resulting model outperforms the accuracy of the original network layer of the large language model.

4. A computer-implemented method according to any one of the preceding claims, **characterized by** to enlarging the bond dimension of the non-unitary tensor network, applying variational optimization techniques to further refine the quantum gates and the tensors of the non-unitary tensor network for fine-tuning the parameters of the quantum circuits (21) and tensor network.

5. A computer-implemented method according to the claim 4, **characterized by** encoding the input data in the (quantum) computing device to provide fine-tuned parameters of the quantum circuits (21) ensuring that the quantum circuits (21) improve the performance of the original network layer

6. A computer-implemented method according to any one of the preceding claims, quantum variational algorithm in Variational Quantum Eigensolver (VQE) algorithm employed to find the optimal parameters of the quantum circuits (21) that maximize the performance of the model.

7. A computer-implemented method according to any one of the preceding claims, the classical computer encodes the input data which consists of classical vectors into the quantum states with normalizing each input vector and using amplitude encoding to map onto a quantum state.

8. A computer-implemented method according to any one of the preceding claims, classical computing device applies the transpose of the unitary operator into the quantum state.

9. A computer-implemented method according to any one of the preceding claims, the classical computing device applies quantum state tomography to the results which are retrieved from quantum computing device to extracting meaningful information from the quantum state.

10. A computer-implemented method according to any one of the preceding claims, classical computing device multiplies the final quantum state vector with the non-unitary tensor network which was obtained after applying disentaglers to the original weight matrix.

11. A computer-implemented method according to any one of the preceding claims, classical computing device converting the results to classical tensor structure for further processing in the neural network

12. A computer program product comprising instructions which, when the program is executed by at least one classical computing device to provide a configuration to a quantum computer that is the quantum circuits (21) to carry out a method according to any one of claims 1-11.

13. A computer-readable data carrier having stored thereon a computer program product according to claim 12.

14. A system (S) for improving the computational efficiency and performance of large language models (LLMs) that comprising at least one classical digital computer (C) for generating and directing a computational task to at least one (quantum) computer (Q) over a network, wherein said classical digital computer (C) comprises at least one digital processor (10) and at least one memory medium (20) **characterized by**;
wherein said digital processor (10) configured to:
receiving a pre-selected large language model (LLM) comprising self-attention layers and multilayer perceptron (MLP) layers, wherein the self-attention layers and the multilayer perceptron layers comprise weight matrices from at least one user or device;
applying disentanglers to decompose the weight matrix of the large language model into two quantum circuits (21) which are one for input and one for output and a nonunitary tensor network for allowing transformation of the weight matrix into two quantum circuits (21) that stored at least one memory medium (20);
processing the non-unitary tensor network with at least one classical digital computing device (40);
sending the transformed and integrated structure of the unitary matrix with a quantum circuits (21) to at least one (quantum) computer (Q) that contains at least one (quantum) processor (30);
encodes the input data which consists of classical vectors into the quantum states with normalizing each input vector and using amplitude encoding to map onto a quantum state;
applies transpose of the unitary operator into the quantum state.
multiplies the final quantum state vector which computed with the data retrieved from quantum (computer) (Q) with the non-unitary tensor network which obtained from applying disentanglers to reconstruction of the LLM architecture.
enlarges the bond dimension of the non-unitary tensor network as well as the number of layers of the quantum circuits (21) and optimizes variationally the new parameters in order to improve upon the precision of the original LLM model.

15. A system (S) according to the claim 14, wherein said (quantum) computer manipulates the qubits with applying/executing the quantum circuits (21) which are unitary quantum circuits that provided from the classical digital computer (C); and sends the obtained results to the classical digital computer (C).
